# EUROPÄISCHE PATENTSCHRIFT

(11) **EP 1 265 727 B1**
(45) Veröffentlichungstag und Bekanntmachung des Hinweises auf die Patenterteilung: **19.05.2004**
(21) Anmeldenummer: 01933696.5
(22) Anmeldetag: 14.03.2001
(51) Int. Cl.: B23Q 1/00, B23Q 1/01, B23Q 11/08

(54) **BEARBEITUNGSZENTRUM**
MACHINING CENTER
CENTRE D'USINAGE

(30) Priorität: 15.03.2000 DE 10012445
(43) Veröffentlichungstag der Anmeldung: 18.12.2002
(73) Patentinhaber: Haller, Hubert, 78647 Trossingen (DE)
(72) Erfinder: Haller, Hubert, 78647 Trossingen (DE)
(74) Vertreter: Neunert, Peter Andreas
(86) Internationale Anmeldenummer: PCT/EP2001/002856
(87) Internationale Veröffentlichungsnummer: WO 2001/068314

(56) Entgegenhaltungen:
- EP-A- 0 257 965
- EP-A- 0 700 751
- EP-A- 0 816 012
- FR-A- 2 766 752
- US-A- 5 181 898
- PATENT ABSTRACTS OF JAPAN vol. 1999, no. 04, 30. April 1999 (1999-04-30) -& JP 11 010564 A (OLYMPUS OPTICAL CO LTD), 19. Januar 1999 (1999-01-19)
- KUHN S: "ZEMENTBETON IM WERKZEUGMASCHINENBAU?" WERKSTATTSTECHNIK, SPRINGER VERLAG. BERLIN, DE, Bd. 80, Nr. 6, 1. Juni 1990 (1990-06-01), Seiten 307-310, XP000143211 ISSN: 0340-4544
- SCHULZ H: "REAKTIONSHARZBETON IM MACHINENBAU" WERKSTATT UND BETRIEB, Bd. 121, Nr. 4, April 1988 (1988-04), Seiten 291-294, XP002174737 MÜNCHEN
- PATENT ABSTRACTS OF JAPAN vol. 010, no. 231 (M-506), 12. August 1986 (1986-08-12) -& JP 61 065757 A (HITACHI SEIKO LTD), 4. April 1986 (1986-04-04)

## Beschreibung

Die Erfindung betrifft ein Bearbeitungszentrum mit einer Werkstückbearbeitungsmaschine gemäß dem Oberbergriff des Anspruchs 1.

Das Prinzip von Werkstückbearbeitungsmaschinen wie z.B. Werkzeugschleifmaschinen, Fräsmaschinen, Drehmaschinen o. ä. ist seit langem bekannt. Diese dienen einerseits zum Instandsetzen von Werkzeugen, d. h. beispielsweise zum Nachschärfen der Schneidkanten von Schneidwerkzeugen, wobei die Schneidengeometrie als solche nach Möglichkeit wieder hergestellt werden soll, andererseits zur Bearbeitung eines Rohlings, d. h. z. B. zur Herstellung eines Drehteils oder zum Einfräsen von Nuten o. ä. und komplizierte Frästeile, die nur mit interpolierenden NC-Achsen hergestellt werden können.

Derartige Werkstückbearbeitungsmaschinen sind in der Regel auf einem Maschinenständer aufgebaut, der sämtliche für die Funktion erforderlichen Baugruppen enthält. Hierzu zählt zunächst die auf den Maschinenständer aufgesetzte und horizontal angeordnete Arbeitsplatte, die in der Regel hochpräzise gefertigt ist und Befestigungsmöglichkeit für weitere Baugruppen aufweist.

Auf der Arbeitsplatte ist ein Werkstückträger aufgesetzt, der das zu bearbeitende Werkzeug aufnimmt. Der Werkstückträger ist beispielsweise mit einem Längs- und einem Quersupport ausgestattet, die eine Schnellverstellung sowohl in Längs- als auch in Querrichtung zulassen. Weiterhin ist die im Werkstückträger integrierte und das Werkstück aufnehmende Werkstückspindel für sich oder mit dem Längssupport gekoppelt und hier antreibbar, so dass beliebige Kombinationen einer Dreh- und Vorschubbewegung realisierbar sind.

Die Bearbeitung des Werkstücks erfolgt mittels eines Bearbeitungswerkzeugs, beispielsweise mittels einer Schleifscheibe, eines Fräsers, eines Meißels, eines Bohrers o. ä., welche an einem Bearbeitungskopf auswechselbar angebracht sind. Je nach Anforderung ist der Bearbeitungskopf mehrachsig verstellbar, so dass ein gewünschter Konturverlauf abgefahren werden kann. Hierzu ist der Bearbeitungskopf an einer vertikal angeordneten und mit einer Höhenverstellung versehenen Bearbeitungssäule gelagert, wobei die Bearbeitungssäule ihrerseits um eine vertikal verlaufende Achse schwenkbar auf einem Drehteller angebracht ist. Der Drehteller ist in der Regel ebenfalls auf der Arbeitsplatte aufgesetzt. Er ist dabei benachbart zum Werkstückträger angeordnet, derart, dass das Bearbeitungswerkzeug auf das Werkstück ausgerichtet werden kann.

Aus der EP 0 700 751 B1, von der die Erfindung ausgeht, ist bekannt, den Drehteller mit der daran befestigten Bearbeitungssäule nicht mehr auf die Arbeitsplatte aufzusetzen, sondern darunterliegend in den Maschinenständer zu integrieren, so dass gegenüber den Ausführungen bei denen der Drehteller auf der Arbeitsplatte aufgesetzt ist stets eine ungehinderte Zugänglichkeit zum Arbeitsbereich möglich ist.

Gemäß der EP 0 700 751 B1 wird die Schwenkbewegung des Bearbeitungskopfes dadurch ermöglicht, dass die diesen tragende Bearbeitungssäule an einem Tragarm befestigt ist, der einerseits am Drehteller befestigt ist, andererseits seitlich aus dem Maschinenständer herausgeführt ist, um die Bearbeitungssäule aufnehmen zu können.

Um eine ähnliche Stabilität wie bei den herkömmlichen Werkstückbearbeitungsmaschinen zu erzielen, bei denen der Drehteller auf der Arbeitsplatte aufgesetzt ist, ist der Drehteller zweifach gelagert. Konkret ist dies dadurch realisiert, dass ein Lagerbolzen vorgesehen ist, der zentral durch den Drehteller hindurchgeführt ist und diesen nach oben und nach unten hin überragt. An den jeweils überstehenden Bolzenenden sind Lager vorgesehen, die sich innerhalb des Maschinenständers und/oder unten an der Arbeitsplatte abstützen.

Eine Halteeinrichtung für ein auf einem Kreisbogen geführtes leichtes Bohrwerkzeug ist in der US 1,630,528 beschrieben. Um eine weitgehende Zugänglichkeit zum Arbeitsbereich zu ermöglichen, ist ein das Bohrwerkzeug haltender Rahmen vorgesehen, welcher auf einer oberhalb dieses Rahmens angeordneten kreisförmig gekrümmten Schiene mit Hilfe eines an der Rahmenoberseite vertikal ausgerichteten und drehbar gelagerten Rades mit SpurKranz geführt ist. Um ein Schwingen des an der gekrümmten Schiene aufgehängten Rahmens in zur Führungsschiene radialer bzw. tangentialer Richtung zu verhindern, ist das untere Ende des das Bohrwerkzeug haltenden Rahmens an einer unterhalb des Werkstücks ebenfalls kreisförmig ausgebildeten Schiene geführt. Der Rahmen ist zu diesem Zweck an dem dem Werkstück zugewandten Ende vorstehend ausgebildet. Das vorstehende Ende des Rahmens weist an vertikal ausgerichteten Achsen drehbar gelagerte Rollen auf, wobei jeweils zwei Rollen die kreisförmig ausgebildete Schiene umschließen, so dass der gesamte Rahmen auf einem Kreisbogen geführt ist.

Da das an der Oberseite des Rahmens angeordnete Rad mit Spurkranz lediglich eine (begrenzte) Kraft in vertikaler Richtung aufnehmen kann und die an dem unteren Ende des Rahmens gelagerten Rollen lediglich eine begrenzte Kraft in radialer Richtung, ist die Halteeinrichtung gemäß der US 1,630,528 nur für Bearbeitungsverfahren, bei denen das Werkzeug nur geringe Kräfte auf das Werkstück überträgt und/oder Verfahren mit hohen Maßtoleranzen geeignet.

Häufig ist jedoch die Stabilität der Führungsordnung gemäß der US 1,630,528 oder gar die der doppelten Lagerung gemäß der EP 0 700 751 B1 dennoch nicht ausreichend, insbesondere dann nicht, wenn die Bearbeitungssäule stabiler ausgeführt ist und/oder zusätzliche Baugruppen, wie Motoren zur Höhen- oder Neigungsverstellung des Bearbeitungskopfs aufgenommen werden, oder wenn, wie beispielsweise bei einem Fräsvorgang, eine größere Kraft auf das zu bearbeitende Werkstück ausgeübt werden muß.

Der Erfindung lag deshalb die Aufgabe zugrunde, eine Werkstückbearbeitungsmaschine der eingangs genannten Art derart weiterzuentwickeln, dass sie die geschilderten Nachteile nicht mehr aufweist. Insbesondere sollte ein gattungsgemäßes Bearbeitungszentrum mit einer Werkstückbearbeitungsmaschine realisiert werden, bei dem die Lagerung für die verschwenkbare Bearbeitungssäule noch stabiler ausgebildet ist, ohne auf die kompakte Bauweise und die ungehinderte Zugänglichkeit zum Arbeitsbereich zu verzichten, so dass eine universelle Einsetzbarkeit möglich ist.

Gelöst wird dieses Problem bei einem gattungsgemäßen Bearbeitungszentrum mittels der im kennzeichnenden Teil des Anspruchs 1 angeführten Merkmale.

Vorteilhafte Ausführungen und Weiterbildungen der Erfindung sind in den Unteransprüchen angegeben.

Die Erfindung basiert auf der Idee, nicht nur den Drehteller stabil zu lagern, sondern eine weitere Lagerstelle vorzusehen, welche zusätzlich zur bereits vorhandenen Lagerung auf der gegenüberliegenden Seite des Bearbeitungskopfes in axialer Verlängerung angeordnet ist. Konkret ist eine Haltevorrichtung vorgesehen, die eine oberhalb des Bearbeitungskopfes in axialer Verlängerung der Achse des Drehtellers angeordnete Lagerstelle aufweist, an der ein zweiter mit der Bearbeitungssäule verbundener Tragarm für die Bearbeitungssäule gelagert ist. Demnach ist auch bei dieser erfindungsgemäßen Anordnung die Bearbeitungssäule außerhalb der Arbeitsplatte angebracht, wodurch der Arbeitsbereich optimal, d. h. ungehindert von allen Seiten zugänglich ist. Weiterhin wird durch diese Art der Lagerung die Belastbarkeit des Drehtellers gegenüber der bisher üblichen einseitigen Doppellagerung erheblich erhöht..

Dadurch läßt sich die Präzision der zu bearbeitenden Werkstücke, insbesondere auch bei solchen, bei denen ein erhöhter Anpreßdruck erforderlich ist, signifikant steigern. Des weiteren kann auch die Bearbeitungssäule selbst stabiler ausgeführt sein und/oder zusätzliche Baugruppen, wie Motoren zur Höhenund Neigungsverstellung des Bearbeitungskopfes, aufnehmen.

Vorteilhafterweise sieht die Erfindung vor, dass sich der motorische Antrieb des Schwenkarms dem ersten (unteren) Tragarm zugeordnet ist, so dass die Lagerstelle des oberen Tragarms in vertikaler Richtung verschiebbar ist. Dadurch können die unvermeidbaren Toleranzen bei der Montage ausgeglichen werden.

In einer besonders vorteilhaften Ausführung der Erfindung ist die Haltevorrichtung als Maschinenrahmen ausgebildet. Dieser Maschinenrahmen ist vorzugsweise so ausgebildet, dass er im wesentlichen den Maschinenständer, die Arbeitsplatte, den Werkzeugträger, das Bearbeitungswerkzeug, den Bearbeitungskopf, die Bearbeitungssäule, den Drehteller, sowie den ersten und zweiten Tragarm umfängt. Neben der einfachen Integration der zweiten Lagerstelle oberhalb des Bearbeitungskopfs in axialer Verlängerung der Achse des Drehtellers, weist eine solche kompakte Form weiterhin den Vorteil auf, dass das Bearbeitungszentrum ggf. als Einheit zum Aufstellungsort transportiert werden kann, ohne aufwendige Schutzvorrichtungen für einzelne Maschinenbestandteile vorsehen zu müssen. Weiterhin tritt keine Verschmutzung der Maschine von außen durch benachbart angeordnete andere Maschinen auf bzw. die in der Maschine selbst bei der Bearbeitung des Werkstücks erzeugten Partikel treten nicht nach außen.

Weiterhin ist vorgesehen, dass der Maschinenrahmen aus Mineralgußkomponenten aufgebaut ist. Eine besonders vorteilhafte Ausführung der Erfindung sieht vor, dass die Mineralgußkomponenten des Rahmens miteinander verklebt und/oder verschraubt sind. Der Vorteil dieser Ausführungsformen liegen in der Erzielung einer optimalen Steifigkeit.

Eine besonders vorteilhafte Ausführungsform der Erfindung sieht vor, dass der Maschinenrahmen eine demontierbare Verkleidung mit einer Schiebetür aufweist. Die Schiebetür ermöglicht die optimale Zugänglichkeit des Arbeitsbereichs während des Arbeitsvorgangs selbst; die leicht demontierbare Verkleidung ermöglicht die stetige Zugänglichkeit zu den Bestandteilen der Maschine zu Reparatur- und/oder Wartungszwekken.

Eine erfindungsgemäße Alternativvariante zu dem vorgehend beschriebenen Maschinenrahmen besteht darin, die Haltevorrichtung als Brücke auszubilden, welche im Wesentlichen den Maschinenständer, die Arbeitsplatte, den Werkzeugträger, das Bearbeitungswerkzeug, den Bearbeitungskopf, die Bearbeitungssäule, den Drehteller und den ersten und zweiten Tragarm übergreift. Auch hierbei ist gewährleistet, dass die zweite Lagerstelle in einfacher Art und Weise oberhalb des Bearbeitungskopfs in axialer Verlängerung der Achse des Drehtellers integriert werden kann. Ein in dieser Art und Weise ausgebildetes Bearbeitungszentrum weist darüber hinaus den Vorteil auf, dass die Einzelkomponenten zum einen sehr einfach herstellbar sind, zum anderen dass Transport und Montage auf einfache Weise zu bewerkstelligen sind.

Eine besonders vorteilhafte Variante dieser Ausführungsform sieht vor, dass in der Brücke ein Kabelkanal vorgesehen ist, von dem Versorgungsleitungen oder dergleichen für diese oder eine in nächster Nähe zu diesem Bearbeitungszentrum angeordnete Maschine aufnehmbar sind. Da ohnehin häufig die Versorgungsleitungen für derartige Maschinen bzw. Bearbeitungszentren von einer speziellen Haltevorrichtung getragen werden müssen, kann in diesem Fall auf eine separate Anordnung verzichtet werden.

Eine weitere Ausgestaltung dieser Variante sieht vor, dass an der Brücke ein Gehäuseteil drehbar gelagert ist, welches zumindest teilweise die Arbeitsplatte, den Werkzeugträger, das Bearbeitungswerkzeug, den Bearbeitungskopf, die Bearbeitungssäule, den Drehteller und den ersten und zweiten Tragarm umfängt. Dieses Gehäuseteil entspricht funktional im Wesentlichen der Schiebetür der vorgenannten Variante. Es ermöglicht zum einen eine optimale Zugänglichkeit des Arbeitsbereichs während des Arbeitsvorgangs selbst. Es ist jedoch darüber hinaus sichergestellt, dass die Arbeitsplatte, der Werkzeugträger, das Bearbeitungswerkzeug, der Bearbeitungskopf, die Bearbeitungssäule, der Drehteller und der erste und zweite Tragarm vor unbefugtem Zugriff geschützt werden.

Vorteilhafterweise ist dieses drehbar gelagerte Gehäuseteil als Ausschnitt eines Zylindermantels ausgebildet, wobei die Mantelflächen im Wesentlichen vertikal ausgerichtet sind. Ein derartiges Gehäuseteil ist sehr einfach herstellbar und eignet sich bevorzugt dazu, in ein feststehendes Gehäuseteil zumindestens teilweise hinein verdreht zu werden. Dieses feststehende Gehäuseteil kann im Übrigen ebenfalls in der Art eines Abschnitts eines Zylindermantels ausgebildet sein.

Aus fertigungstechnischer Sicht ist es vorteilhaft, die Brücke aus Stahl zu fertigen. Darüber hinaus stellt eine Stahlbrücke die hohen Anforderungen an die Stabilität der gesamten Anordnung sicher, so dass eine sehr präzise Bearbeitung eines Werkstücks ermöglicht wird.

Erfindungsgemäß ist weiterhin fernerhin vorgesehen, dass das feststehende Gehäuseteil aus Blech gefertigt ist und das drehbar gelagerte Gehäuseteil aus Makrolon, Glas oder dergleichen. Eine Blechummantelung hat allgemein den Vorteil der kostengünstigen Herstellbarkeit, die transparente Ausführung des drehbar gelagerten Gehäuseteils stellt eine optische Kontrolle der bei der Bearbeitung zugänglichen Teile sicher.

Aus Kosten- und Stabilitätsgründen ist das drehbar gelagerte Gehäuseteil bevorzugt mit einem Stahldeckel ausgestattet.

Die Erfindung wird nachstehend näher anhand der in den Figuren schematisch dargestellten Ausführungsbeispiele erläutert. Es zeigen:
- Figur 1: eine Schnittdarstellung einer ersten erfindungsgemäßen Ausführungsvariante eines Bearbeitungszentrums,
- Figur 2: eine perspektivische Außenansicht des erfindungsgemäßen Bearbeitungszentrums gemäß Figur 1 und
- Figur 3: eine perspektivische Innenansicht des erfindungsgemäßen Bearbeitungszentrums gemäß der Figur 1,
- Figur 4: eine perspektivische Außenansicht einer zweiten erfindungsgemäßen Ausführungsvariante eines Bearbeitungszentrums.

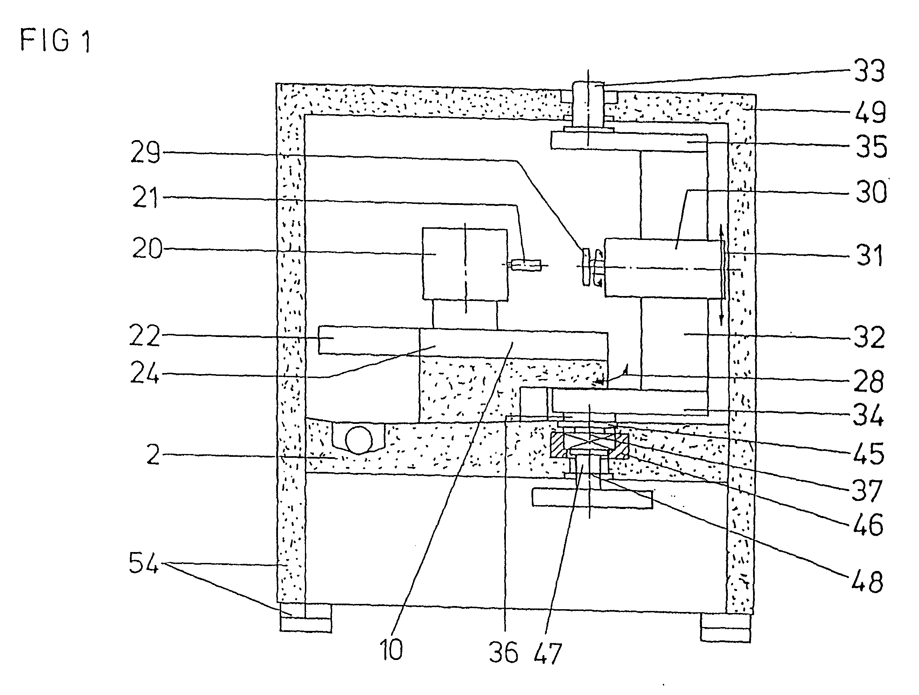

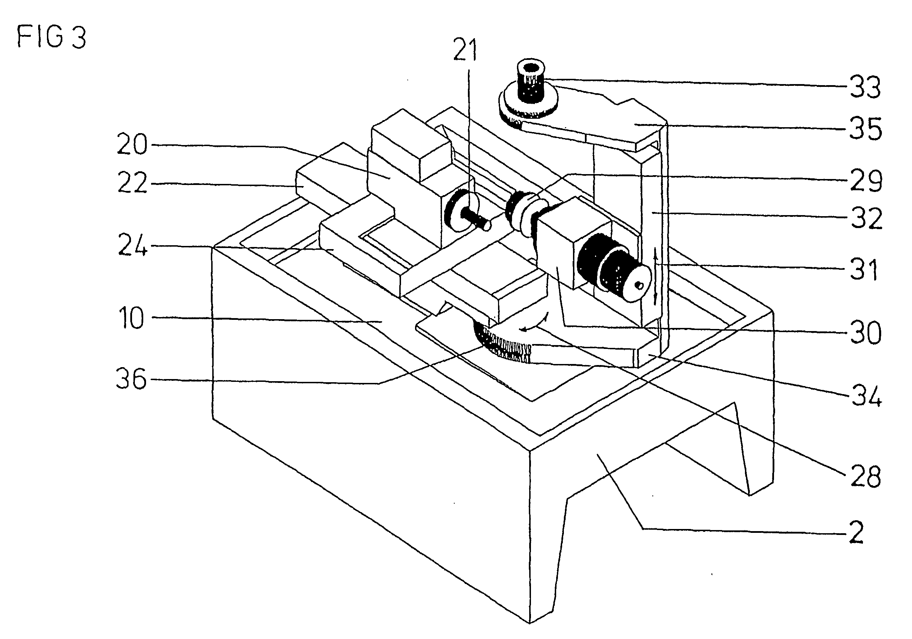

Das Bearbeitungszentrum gemäß den Figuren 1 und 3 besitzt einen Maschinenständer 2 in an sich bekannter Ausführung, der sämtliche Bauelemente bzw. Bauteilgruppen aufnimmt. Der Maschinenständer 2 trägt eine Arbeitsplatte 10, die horizontal angeordnet und mit einer hochpräzise und plangeschliffenen Oberfläche versehen ist. Die Arbeitsplatte 10 erstreckt sich im wesentlichen vollständig über die gesamte Länge des Maschinenständers 2 und ist im allgemeinen symmetrisch in Bezug auf eine längs durchgehende Nut ausgeführt. Die Nut dient zur Befestigung eines von einem Längssupport 22 und einem Quersupport 24 gebildeten Kreuzschlittens, der einen Werkstückträger 20 aufnimmt. Der Werkstückträger 20 kann damit sowohl in Längs- als auch in Querrichtung verfahren werden. Der Werkstückträger 20 nimmt ein zu bearbeitendes Werkstück 21 auf, welches beispielsweise ein Fräser sein kann, dessen Schneidkanten nachgeschliffen werden müssen oder ein Werkstück, welches selbst mit Hilfe eines Fräsers bearbeitet werden soll.

Hierfür ist ein Bearbeitungskopf 30 vorgesehen, der an einer Bearbeitungssäule 32 in an sich bekannter Weise höhenverstellbar gelagert ist. Die Höhenverstellbarkeit ist in der Zeichnung mit Hilfe eines mit dem Bezugszeichen 31 versehenen Doppelpfeils gekennzeichnet. Die Bearbeitungssäule 32 ist vertikal verlaufend an einem Ende eines ersten Tragarms 34 angeordnet. Das gegenüberliegende Ende des ersten Tragarms 34 ist mit einem Drehteller 36 drehfest gekoppelt, welcher unterhalb der Arbeitsplatte 10 im Maschinenständer 2 in der nachstehend näher beschriebenen Art und Weise drehbar gelagert ist. Die drehbare Lagerung ist mit Hilfe des mit dem Bezugszeichen 28 versehenen Doppelpfeils gekennzeichnet.

Durch diese Lagerung kann die Bearbeitungssäule 32 - und mit ihr der Bearbeitungskopf 30 - um eine vertikal verlaufende Achse 37 verschwenkt werden.

Gemäß der Zeichnung ist an dem Drehteller 36 eine durch einen Dichtring 45 und einen Eingußring 46 umschlossene Welle 47 mit einem Aufnahmeflansch 48 für ein HD-Getriebe verbunden, mit welchem die Drehbewegung des Drehtellers 36 und damit der Bearbeitungssäule 32 bewerkstelligt wird.

Die Anordnung des Drehtellers 36 ist so gewählt, dass die Rotationsachse die Symmetrieachse der Arbeitsplatte 10 (senkrecht) schneidet. Damit kann das Bearbeitungswerkzeug 29, das am Bearbeitungskopf 30 anbringbar ist, exakt im Drehzentrum plaziert und in Bezug auf das zu bearbeitende Werkstück 21 zentral ausgerichtet werden. Ausgehend von dieser Mittellage kann eine zu beiden Seiten hin symmetrische Schwingbewegung ausgeführt werden, die insbesondere die Bearbeitung von Radien zum Stirnseitenbereich des Werkstücks 21 erlaubt.

Erfindungsgemäß ist nun vorgesehen, dass sich oberhalb des Bearbeitungskopfs 30 in axialer Verlängerung der Achse 37 des Drehtellers 36 eine Lagerstelle 33 befindet. An dieser Lagerstelle 33 ist ein zweiter mit der Bearbeitungssäule 32 verbundener Tragarm 35 für die Bearbeitungssäule 32 gelagert. Diese zweite Lagerstelle 33 befindet sich in einer Ausnehmung 53 eines Maschinenrahmens 49.

Die Länge der beiden Tragarme 34 und 35 ist so bemessen, dass sie den Maschinenständer 2 nach außen hin so weit überragen, dass die beschriebene Schwenkbewegung ungehindert möglich ist. Auch ist der Maschinenständer 2 im Schwenkbereich der Tragarme 34 und 35 so gestaltet, dass ausgehend von der beschriebenen Mittellage des Bearbeitungskopfes 30 bzw. die Bearbeitungssäule 32 zu beiden Seiten um über 90°, damit also um mehr als 180° insgesamt verschwenkbar ist. Die Bearbeitung des Werkstücks 21 ist prinzipiell von allen Seiten möglich, d. h. also auch von unten her.

Sämtliche, vorstehend beschriebenen Bewegungsabläufe können sowohl manuell als auch teil- oder vollautomatisch gesteuert ablaufen. So ist beispielsweise die Schwenkbewegung des Drehtellers 36 über ein am Aufnahmeflansch 48 angeschlossenes HD-Getriebe möglich. In analoger Weise gilt dies auch für die Höhenverstellung des Bearbeitungskopfs 30.

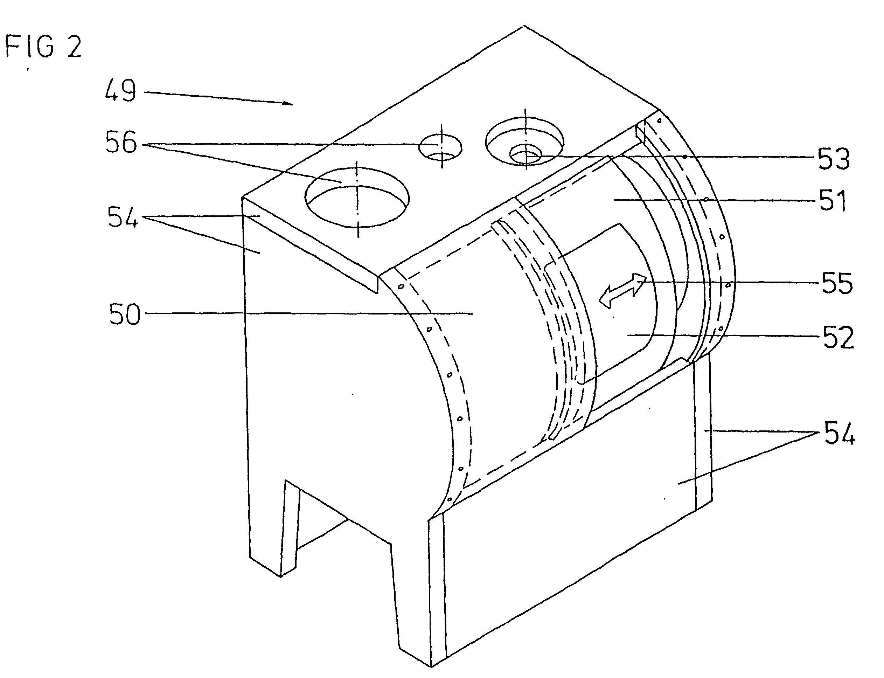

Zur Verdeutlichung der Integration des Bearbeitungszentrums in den Maschinenrahmen 49 stellt Figur 2 eine perspektivische Ansicht vor. Der Maschinenrahmen 49 besteht aus mehreren durch die Bezugsziffer 54 kenntlich gemachten Mineralgußkomponenten. Im Beispiel weist die Oberseite des Maschinenrahmens 49 mehrere Ausnehmungen 56 auf, durch die beispielsweise Versorgungskabel, Versorgungsleitungen oder ähnliches für den Betrieb einzelner Maschinenelemente des Bearbeitungszentrums bzw. für zusätzliche Geräte oder Werkzeuge hindurchführbar sind. Weiterhin weist das Oberteil des Maschinenrahmens 49 auch eine Ausnehmung 53 auf, zur Aufnahme der Lagerstelle 33 für die Bearbeitungssäule 32. Die Frontseite des Maschinenrahmens 49 weist im Beispiel eine demontierbare Verkleidung 50 und eine Schiebetür 51 auf. Die Verkleidung 50 ist aus dem Grund demontierbar ausgeführt um zu Wartungs- und/oder Reparaturzwecken einen uneingeschränkten Zugang zu der Bearbeitungsmaschine zu ermöglichen. Die Schiebetür 51 ist in horizontaler Richtung (Die Bewegungsrichtung der Schiebetür ist durch einen mit dem Bezugszeichen 55 versehenen Doppelpfeil gekennzeichnet) verschiebbar. Sie ermöglicht eine optimale Zugänglichkeit des Arbeitsbereichs. Sie ist im Beispiel mit einem Sichtfenster 52 versehen, so dass der Bediener jederzeit den Arbeitsvorgang der Bearbeitungsmaschine überwachen kann.

Zur Erzielung einer optimalen Steifigkeit ist im Beispiel der Maschinenrahmen 49 aus Mineralgußkomponenten 54 aufgebaut, die miteinander verklebt und verschraubt sind. Weiterhin sind solche Mineralgußkomponenten 54 kostengünstig herstellbar und zeichnen sich zusätzlich durch ihr geringes Gewicht aus.

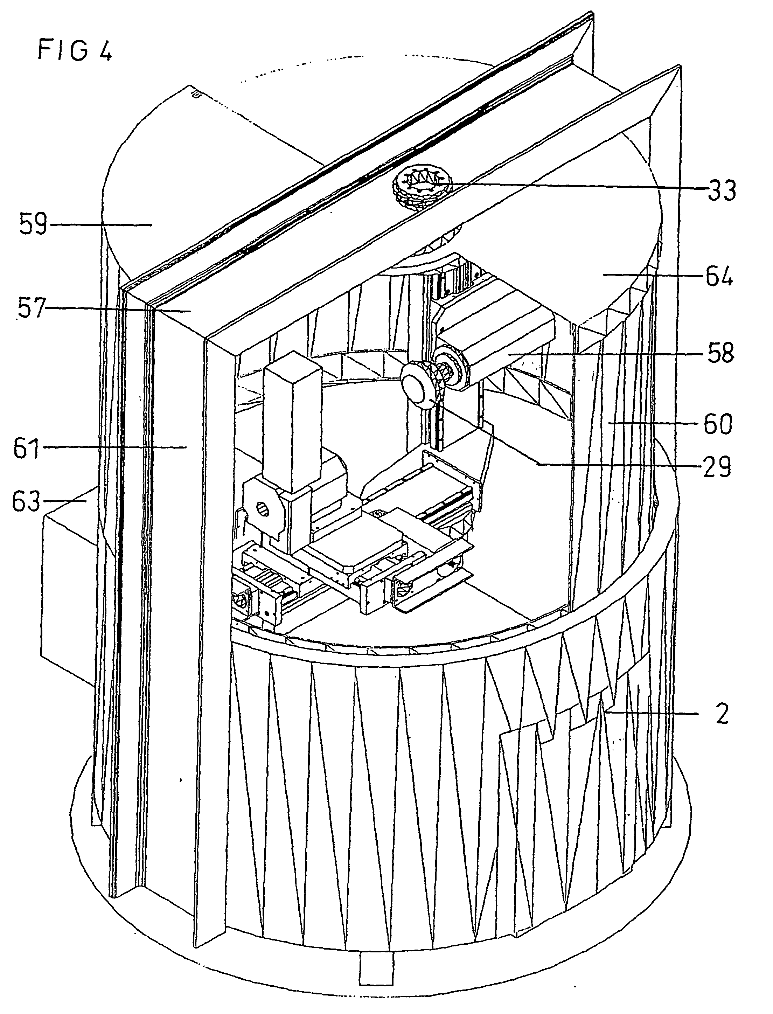

Auch das Bearbeitungszentrum gemäß der Figur 4 besitzt einen Maschinenständer 2 in an sich bekannter Ausführung, der sämtliche Bauelemente bzw. Bauteilgruppen aufnimmt. Vorliegend ist dieser Maschinenständer 2 nicht wie in dem vorangegangenen Beispiel quaderförmig ausgestaltet sondern zylinderförmig. Er trägt die vorgehend beschriebenen Bauelemente und Bauteilgruppen, also insbesondere die Arbeitsplatte den Längssupport, den Quersupport, den Werkstückträger, das Werkstück, den Bearbeitungskopf, die Bearbeitungssäule, den Drehteller, den unteren Tragarm usw. Der Übersichtlichkeit halber sind diese Einzelkomponenten in der Fig. 4 nicht mit eigenen Bezugszeichen versehen. Es wird jedoch ausdrücklich darauf hingewiesen, dass sämtliche aus den Fig. 1 bis 3 ersichtlichen Komponenten der Werkstückbearbeitungsmaschine ebenfalls vorhanden sind.

Anders als bei dem Bearbeitungszentrum, welches in den Fig. 1 bis 3 dargestellt ist, ist kein Maschinenrahmen 49 der vorbeschriebenen Art vorgesehen, sondern eine Stahlbrücke 57, welche eine oberhalb des Bearbeitungskopfes 30 in axialer Verlängerung der Achse des Drehtellers angeordnete Lagerstelle 33 aufweist, an der der zweite mit der Bearbeitungssäule 32 verbundene Tragarm 35 für die Bearbeitungssäule 32 gelagert ist. Diese Stahlbrücke 57 übergreift in dem in der Fig. 4 dargestellten Beispiel im Wesentlichen den Maschinenständer 2, die Arbeitsplatte 10, den Werkzeugträger 20, das Bearbeitungswerkzeug 29, den Bearbeitungskopf 30, die Bearbeitungssäule 32, den Drehteller 36 und den ersten und zweiten Tragarm 34 und 35.

In dieser Stahlbrücke 57 ist ein Kabelkanal 61 vorgesehen, von dem Versorgungsleitungen oder dergleichen aufnehmbar sind. An der Stahlbrücke 57 ist ein Gehäuseteil 60 drehbar gelagert. Dieses vorzugsweise aus Makrolon, Glas oder dergleichen gefertigte drehbar gelagerte Gehäuseteil 60 ist in der Art eines Ausschnitts eines Zylindermantels ausgebildet, und weist oberseitig einen Stahldeckel 64 auf. Dieser (Halb-) Zylindermantel mit Stahldeckel 64 umfängt teilweise die Arbeitsplatte 10, den Werkzeugträger 20, das Bearbeitungswerkzeug 29 den Bearbeitungskopf 30, die Bearbeitungssäule 32, den Drehteller 36 und den ersten und zweiten Tragarm 34 und 35.

Darüber hinaus weist das Bearbeitungszentrum ein feststehendes vorzugsweise aus Blech gefertigtes Gehäuseteil 59 auf, welches ebenfalls in der Art eines Ausschnitts eines Zylindermantels ausgebildet ist. Die Grundfläche dieses Zylindermantels ist jedoch geringfügig größer als die Grundfläche der drehbar gelagerten Zylindermantelhälfte des Gehäuseteils 60. Auf diese Weise ist es möglich, dass dieses drehbar gelagerte Gehäuseteil 60 mindestens teilweise in dieses feststehende Gehäuseteil 59 hinein verdrehbar ist.

Dieser drehbar gelagerte Gehäuseteil 60 übernimmt die Funktion des vorgehend beschriebenen Sichtfensters 52, so dass der Bediener jederzeit den Arbeitsvorgang der Bearbeitungsmaschine überwachen kann.

### Bezugszeichenliste

- 2: Maschinenständer
- 10: Arbeitsplatte
- 20: Werkstückträger
- 21: Werkstück
- 22: Längssupport
- 24: Quersupport
- 28: Schwenkbarkeit
- 29: Bearbeitungswerkzeug
- 30: Bearbeitungskopf
- 31: Höhenverstellbarkeit
- 32: Bearbeitungssäule
- 33: Lagerstelle
- 34: erster Tragarm
- 35: zweiter Tragarm
- 36: Drehteller
- 37: Achse
- 45: Dichtring
- 46: Eingußring
- 47: Welle mit Aufnahmeflansch
- 48: Aufnahmeflansch für HD-Getriebe
- 49: Maschinenrahmen
- 50: demontierbare Verkleidung
- 51: Schiebetür
- 52: Sichtfenster
- 53: Ausnehmung für Lagerstelle
- 54: Mineralgußkomponenten
- 55: Bewegungsrichtung der Schiebetür
- 56: Ausnehmung
- 57: Stahlbrücke
- 58: Spindelmotor
- 59: feststehender Blechgehäuseteil
- 60: drehbar gelagerter Makralon-/Glasgehäuseteil
- 61: Kabelkanal
- 63: Kühlmittelbehälter
- 64: Stahldeckel

## Patentansprüche

1. Bearbeitungszentrum mit einer Werkstückbearbeitungsmaschine, welche
- eine von einem Maschinenständer (2) getragene und im wesentlichen horizontal angeordnete Arbeitsplatte (10),
- einen ein Werkstück (21) aufnehmenden und auf der Arbeitsplatte (10) aufgesetzten Werkstückträger (20),
- einen ein Bearbeitungswerkzeug (29) aufnehmenden Bearbeitungskopf (30), der an einer Bearbeitungssäule (32) gelagert ist, welche vertikal angeordnet und mittels eines Drehtellers (36), welcher unterhalb der Arbeitsplatte (10) und im Maschinenständer (2) integriert angeordnet ist, um eine vertikal verlaufende Achse (37) schwenkbar ist,
- einen ersten Tragarm (34) für die Bearbeitungssäule (32), der einen Ends mit dem Drehteller (36) fest verbunden und anderen Ends seitlich über die Arbeitsplatte (10) hinausgeführt ist, derart, dass die dort angebrachte Bearbeitungssäule (32) um die Arbeitsplatte (10) herum verschwenkbar ist, aufweist,
**dadurch gekennzeichnet, dass**
- eine Haltevorrichtung vorgesehen ist, die eine oberhalb des Bearbeitungskopfes (30) in axialer Verlängerung der Achse (37) des Drehtellers (36) angeordnete Lagerstelle (33) aufweist, an der ein zweiter mit der Bearbeitungssäule (32) verbundener Tragarm (35) für die Bearbeitungssäule (32) gelagert ist, und dass die Haltevorrichtung als Brücke (57) oder als Maschinenrahmen (49) ausgebildet ist, oder welcher im wesentlichen den Maschinenständer (2), die Arbeitsplatte (10), den Werkzeugträger (20), das Bearbeitungswerkzeug (29), den Bearbeitungskopf (30), die Bearbeitungssäule (32), den Drehteller (36) und den ersten und zweiten Tragarm (34, 35) umfängt.

2. Bearbeitungszentrum nach Anspruch 1,
**dadurch gekennzeichnet, dass** der Maschinenrahmen (49) auf Mineralgußkomponenten (54) aufgebaut ist.

3. Bearbeitungszentrum nach Anspruch 1 oder 2,
**dadurch gekennzeichnet, dass** die Mineralgußkomponenten (54) miteinander verklebt sind.

4. Bearbeitungszentrum nach einem der Ansprüche 1 bis 3,
**dadurch gekennzeichnet, dass** die Mineralgußkomponenten (54) miteinander verschraubt sind.

5. Bearbeitungszentrum nach einem der Ansprüche 1 bis 4,
**dadurch gekennzeichnet, dass** der Maschinenrahmen (49) eine demontierbare Verkleidung (50) aufweist.

6. Bearbeitungszentrum nach einem der Ansprüche 1 bis 5,
**dadurch gekennzeichnet, dass** der Maschinenrahmen (49) eine Schiebetür (59) aufweist.

7. Bearbeitungszentrum nach einem der Ansprüche 1 bis 6,
**dadurch gekennzeichnet, dass** die Schiebetür (51) ein Sichtfenster (52) aufweist.

8. Bearbeitungszentrum nach Anspruch 7,
**dadurch gekennzeichnet, dass** in der Brücke (57) ein Kabelkanal (61) vorgesehen ist, von dem Versorgungsleitungen oder dergleichen aufnehmbar sind.

9. Bearbeitungszentrum nach Anspruch 7 oder 8,
**dadurch gekennzeichnet, dass** an der Brücke (57) ein Gehäuseteil (69) drehbar gelagert ist, welches zumindestens teilweise die Arbeitsplatte (10), den Werkzeugträger (20), das Bearbeitungswerkzeug (29), den Bearbeitungskopf (30), die Bearbeitungssäule (32), den Drehteller (36) und den ersten und zweiten Tragarm (34, 35) umfängt.

10. Bearbeitungszentrum nach Anspruch 9,
**dadurch gekennzeichnet, dass** das drehbar gelagerte Gehäuseteil (60) als Ausschnitt eines Zylindermantels ausgebildet ist.

11. Bearbeitungszentrum nach Anspruch 9 oder 10,
**dadurch gekennzeichnet, dass** ein feststehendes Gehäuseteil (59) vorgesehen ist, in welches das drehbar gelagerte Gehäuseteil (69) zumindestens teilweise hineinverdrehbar ist.

12. Bearbeitungszentrum nach einem der vorhergehenden Ansprüche,
**dadurch gekennzeichnet, dass** die Brücke (57) aus Stahl gefertigt ist.

13. Bearbeitungszentrum nach Anspruch 11 oder 12,
**dadurch gekennzeichnet, dass** das feststehende Gehäuseteil (59) aus Blech gefertigt ist.

14. Bearbeitungszentrum nach den Ansprüchen 9 bis 13,
**dadurch gekennzeichent, dass** das drehbar gelagerte Gehäuseteil (69) aus Makralon, Glas oder dergleichen gefertigt ist.

15. Bearbeitungszentrum nach den Ansprüchen 9 bis 14,
**dadurch gekennzeichnet, dass** das drehbar gelagerte Gehäuseteil (60) einen Stahldeckel (64) aufweist.

16. Bearbeitungszentrum nach einem der vorhergehenden Ansprüchen,
**dadurch gekennzeichnet, dass** der motorische Antrieb des Schwenkarms den ersten Tragarm (34) zugeordnet ist, so dass die Lagerstelle des zweiten Tragarms (35) verschiebbar ist und somit vermeidbare Toleranzen bei der Montage ausgleicht.

## Claims

1. A machining centre having a workpiece machining machine, which comprises
- a worktop (10) borne by a machine tool table (2) and disposed substantially horizontally,
- a workpiece support (20) receiving a workpiece (21) and placed on the worktop (10),
- a machining head (30) receiving a machining tool (29), which is mounted on a machining column (32), which is vertically disposed and can swivel around a vertically extending axis (37) by means of a rotary table (36), which is provided integrated beneath the worktop (10) and in the machine tool table (2),
- a first support arm (34) for the machining column (32), which at one end is securely connected to the rotary table (36) and at the other end is guided laterally beyond the worktop (10) in such a manner that the machining column mounted there can be swivelled around the worktop (10),
**characterised in that** a retaining device is provided which comprises a bearing (33) disposed above the machining head (30) in the axial extension of the axis (37) of the rotary table (36), at which a second support arm (35), connected to the machining column (32), for the machining column (32) is mounted,
and **in that** the retaining device is constructed as a bridge (57) or as a machine frame (49), or which substantially surrounds the machine tool table (2), the worktop (10), the tool carrier (20), the machining tool (29), the machining head (30), the machining column (32), the rotary table (36) and the first and second support arms (34, 35).

2. A machining centre according to Claim 1,
**characterised in that** the machine frame (49) is constructed on mineral casting components (54).

3. A machining centre according to Claim 1 or 2,
**characterised in that** the mineral casting components (54) are glued together.

4. A machining centre according to one of Claims 1 to 3,
**characterised in that** the mineral casting components (54) are screwed together.

5. A machining centre according to one of Claims 1 to 4,
**characterised in that** the machine frame (49) comprises a detachable covering (50).

6. A machining centre according to one of Claims 1 to 5,
**characterised in that** the machine frame (49) comprises a sliding door (59).

7. A machining centre according to one of Claims 1 to 6,
**characterised in that** the sliding door (51) comprises a window (52).

8. A machining centre according to Claim 7,
**characterised in that** in the bridge (57) is provided a cable conduit (61) by which supply lines or the like can be housed.

9. A machining centre according to Claim 7 or 8,
**characterised in that** pivoted on the bridge (57) is a housing part (69) which at least partially surrounds the worktop (10), the tool support (20), the machining tool (29), the machining head (30), the machining column (32), the rotary table (36) and the first and second support arms (34, 35).

10. A machining centre according to Claim 9,
**characterised in that** the pivoted housing part (60) is constructed as a cut-out of a cylinder jacket.

11. A machining centre according to Claim 9 or 10,
**characterised in that** a fixed housing part (59) is provided, into which the pivoted housing part (69) can be twisted at least to some extent.

12. A machining centre according to one of the preceding Claims,
**characterised in that** the bridge (57) is produced from steel.

13. A machining centre according to Claim 11 or 12,
**characterised in that** the fixed housing part (60) is produced from sheet metal.

14. A machining centre according to Claims 9 to 13,
**characterised in that** pivoting housing part (69) is produced from Makralon, glass or the like.

15. A machining centre according to one of Claims 9 to 14,
**characterised in that** the pivoted housing part (60) comprises a steel cover (64).

16. A machining centre according to one of the preceding Claims,
**characterised in that** the motorised drive of the swivel arm is associated with the first support arm (34) so that the bearing of the second support arm (35) is displaceable and thus compensates for avoidable tolerances during assembly.

## Revendications

1. Centre d'usinage comportant une machine d'usinage de pièces, qui présente
- un plan de travail (10) porté par un support de machine (2) et disposé essentiellement à l'horizontale,
- un support de pièce (20) permettant de loger une pièce (21) et placé sur le plan de travail (10),
- une tête d'usinage (30) permettant d'accueillir un outil d'usinage (29) et logée sur une colonne d'usinage (32), qui est disposée à la verticale et peut pivoter autour d'un axe (37) s'étendant verticalement au moyen d'un plateau tournant (36) disposé en dessous du plan de travail (10) et intégré dans le support de machine (2),
- un premier bras porteur (34) pour la colonne d'usinage (32), dont la première extrémité est reliée fixement au plateau tournant (36) et dont l'autre extrémité dépasse latéralement au-delà du plan de travail (10), de telle sorte que la colonne d'usinage (32) qui y est montée peut pivoter autour du plan de travail (10),
**caractérisé en ce qu'**
- il est prévu un dispositif de maintien, qui présente un logement de palier (33) disposé au-dessus de la tête d'usinage (30), dans le prolongement axial de l'axe (37) du plateau tournant (36), et sur lequel est logé un deuxième bras porteur (35) relié à la colonne d'usinage (32) pour la colonne d'usinage (32), et le dispositif de maintien est configuré sous forme de pont (57) ou de châssis de machine (49), ou entoure pour l'essentiel le support de machine (2), le plan de travail (10), le support d'outil (20), l'outil d'usinage (29), la tête d'usinage (30), la colonne d'usinage (32), le plateau tournant (36) et le premier et le deuxième bras porteur (34, 35).

2. Centre d'usinage selon la revendication 1,
**caractérisé en ce que**
le châssis de machine (49) est monté sur des composants en fonte minérale (54).

3. Centre d'usinage selon la revendication 1 ou 2,
**caractérisé en ce que**
les composants en fonte minérale (54) sont collés les uns aux autres.

4. Centre d'usinage selon l'une des revendications 1 à 3,
**caractérisé en ce que**
les composants en fonte minérale (54) sont vissés les uns aux autres.

5. Centre d'usinage selon l'une des revendications 1 à 4,
**caractérisé en ce que**
le châssis de machine (49) présente un habillage démontable (50).

6. Centre d'usinage selon l'une des revendications 1 à 5,
**caractérisé en ce que**
le châssis de machine (49) présente une porte coulissante (51).

7. Centre d'usinage selon l'une des revendications 1 à 6,
**caractérisé en ce que**
la porte coulissante (51) présente un hublot (52).

8. Centre d'usinage selon la revendication 7,
**caractérisé en ce qu'**
il est prévu dans le pont (57) un canal de câblage (61), dans lequel peuvent être logées des lignes d'alimentation ou analogues.

9. Centre d'usinage selon la revendication 7 ou 8,
**caractérisé en ce qu'**
une partie de boîtier (60) est logée de façon rotative sur le pont (57) et entoure au moins en partie le plan de travail (10), le support d'outil (20), l'outil d'usinage (29), la tête d'usinage (30), la colonne d'usinage (32), le plateau tournant (36) et le premier et le deuxième bras porteur (34, 35).

10. Centre d'usinage selon la revendication 9,
**caractérisé en ce que**
la partie de boîtier logée de façon rotative (60) est configurée sous forme de partie d'un corps de cylindre.

11. Centre d'usinage selon la revendication 9 ou 10,
**caractérisé en ce qu'**
il est prévu une partie de boîtier fixe (59) dans laquelle peut s'insérer par rotation, au moins en partie, la partie de boîtier logée de façon rotative (60).

12. Centre d'usinage selon l'une des revendications précédentes,
**caractérisé en ce que**
le pont (57) est fabriqué en acier.

13. Centre d'usinage selon la revendication 11 ou 12,
**caractérisé en ce que**
la partie de boîtier fixe (59) est fabriquée en tôle.

14. Centre d'usinage selon les revendications 9 à 13,
**caractérisé en ce que**
la partie de boîtier logée de façon rotative (60) est fabriquée en « Macralon », en verre ou analogue.

15. Centre d'usinage selon les revendications 9 à 14,
**caractérisé en ce que**
la partie de boîtier logée de façon rotative (60) présente un couvercle en acier (64).

16. Centre d'usinage selon l'une des revendications précédentes,
**caractérisé en ce que**
l'entraînement motorisé du bras articulé est associé au premier bras porteur (34), de telle sorte que le logement de palier du deuxième bras porteur (35) est mobile et compense ainsi les tolérances pouvant être évitées pendant le montage.
